# EUROPEAN PATENT SPECIFICATION

(11) **EP 0 722 229 B1**
(45) Date of publication and mention of the grant of the patent: **26.10.2005**
(21) Application number: 95850218.9
(22) Date of filing: 05.12.1995
(51) Int. Cl.: H04B 7/26, H04Q 7/30

(54) **Device at telecommunications system**
Einrichtung für Telekommunikationssystem
Equipement pour système de télécommunication

(30) Priority: 16.01.1995 SE 9500121
(43) Date of publication of application: 17.07.1996
(73) Proprietor: TELIA AB, 123 86 Farsta (SE)
(72) Inventor: Tegler, Susanne, S-226 54 Lund (SE)
(74) Representative: Hopfgarten, Nils

(56) References cited:
- EP-A- 0 631 450
- PROCEEDINGS OF THE VEHICULAR TECHNOLOGY CONFERENCE, STOCKHOLM, JUNE 8 - 10, 1994, vol. 2, 8 June 1994, INSTITUTE OF ELECTRICAL AND ELECTRONICS ENGINEERS, pages 1130-1134, XP000497595 UHLIRZ M: "CONCEPT OF A GSM-BASED COMMUNICATION SYSTEM FOR HIGH-SPEED TRAINS"
- PROCEEDINGS OF THE VEHICULAR TECHNOLOGY CONFERENCE, STOCKHOLM, JUNE 8 - 10, 1994, vol. 2, 8 June 1994, INSTITUTE OF ELECTRICAL AND ELECTRONICS ENGINEERS, pages 1069-1073, XP000496841 AKERBERG D: "DECT TECHNOLOGY FOR RADIO IN THE LOCAL LOOP"

## Description

### TECHNICAL FIELD

The present invention relates to a telecommunications systems for example of type DECT at which wireless communication is performed between a fixed station and a distributed station and between a distributed station and terminals by utilization of radio signals with time multiplexing, wherein half as many time slots when compared to DECT is used between fixed stations and distributed stations and an adaptive delay element is provided for synchronization of thransmission between fixed stations and distributed station.

### PRIOR ART

By EP,A2,605 182 is shown a repeater for mobile telephone systems. The repeater is among other things intended for DECT. The repeater is intended to repeat traffic between a base station and mobile units. The connection between the base station and the repeater can be cable or radio.

Further is shown by WO,A1,94/1 941 repeaters in a wireless telephone system which is using TDD. According to one of the embodiment examples the radio interface between the base station consist of a radio link.

The contents of the previously known documents describes mobile telephone systems which consist of fixed respective mobile units and where the system is allotted one or more repeaters which by repeating radio signals between the fixed and the mobile units allows extended geographical coverage for the system without cable being used as transmission medium.

The produced documents show ways to communicate by using radio signals between a fixed station and a distributed station with the aim to achieve a system of large and flexible coverage area without having to utilize cables for the signal transmission.

### DESCRIPTION OF THE INVENTION

### TECHNICAL PROBLEM

The aim with the invention is to achieve an, in relation to the prior art, improved radio network. The standard DECT is in all essentials a description of foremost the radio interface in a digital wireless telecommunications system, the fixed part of which can be divided into a central unit and one or more Radio Fixed Parts which operate as base stations in the system. The fixed part of the system communicates in a wireless way with the to the system belonging mobile or fixed telecommunications terminals. When larger geographical areas shall be covered by DECT this will imply that the distance between the central unit and the base stations can be comparatively great. In the systems which are available today the central unit and the base stations are permanent connected to each other via cable, or they are integrated in the same physical unit. Since the cost for cable running is comparatively high, especially in public environments, it might in some cases be of economical advantage to utilize radio connections as transmission media instead of cables. The present invention relates to the technical problem of allowing an efficient use of the radio spectrum combined with minimal time delay at transmission of radio signals between a central unit and one or more base stations included in a wireless communications system.

The primary technical problem in this connection consists of achieving a spectrum efficient technique (efficient use of the bandwidth) for this radio connection. Even if the connection CCFP-RFP can be placed comparatively high in the frequency spectrum (10, 15, 20, 25, 35 GHz) it is reasonable to suppose that frequency regulating authorities will not accept a solution which has considerably lower spectrum efficiency than the radio connection of DECT itself.

### THE SOLUTION

The above mentioned aims are achieved by a telecommunications system having the characterizing features indicated in the enclosed claims. Preferred embodiment is characterised in among other things that the in the TDMA/TDD-structure included information bits are transmitted with double bit rate between the transmitting and receiving equipment. To make it possible to use all the time slots in the interface these are crossed in a way implying that the first time slot from the central unit is crossed with the last time slot to the central unit, CCFP. By that a radio connection has been achieved which has a frequency efficiency which corresponds to the radio connection of the DECT-system in down- and uplink.

The invention is primarily intended for DECT-system and where the central unit is geographically separated from the base station/base stations. The most important field of application is within public systems, such as for instance radio based local network systems.

### ADVANTAGES

In the systems which are commercially available at present, CCFP and RFP are permament connected to each other either via cable or they are integrated in the same unit. Generally speaking the costs for cable running is high, especially in public environments, partly because the distances often are long, and partly because cable running often requires encroachment on plants and buildings. At establishing of DECT-systems with comparatively long distances between CCFP and RFPs, it is therefore economically attractive to use radio as transmission medium instead of cable. A further advantage with radio is that the propagation delay becomes smaller than for a cable. Wave propagation velocity on cable is 20-50% lower than in free space. With a radio connection between CCFP and RFP also the flexibility and reusefulness (at for instance a removal of the whole system) are increased and the system can be installed considerably quicker than if cable must be arranged. The invention consequently results in a more cost efficient installation of the mentioned system.

### DESCRIPTION OF FIGURES

The invention will now be described by means of not restricted examples of embodiments and with references to the enclosed schematically made drawings. In the drawings are shown in
Figure 1 a DECT-system and its connection to the surroundings.
Figure 2 the channel structure of DECT in the time/frequency plane for a system with a transceiver.
Figure 3 the contents in a DECT time slot.
Figure 4 time/frequency division where the time scale indicates when the time slots occur at RFP.
Figure 5 incoming and outgoing bits as function of time in RFP and CCFP.

### PREFERRED EMBODIMENT

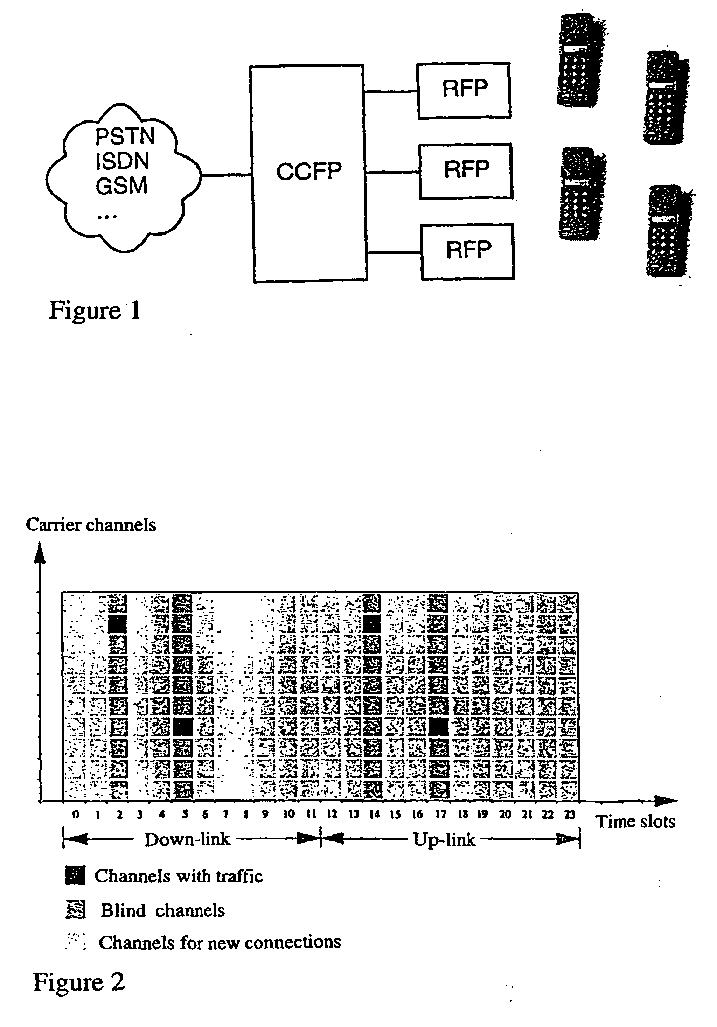

The standard DECT (Digital European Cordless Telecommunications) was approved by ETSI in august 1992 and is a description of foremost the radio interface in a digital wireless telecommunications system. In Figure 1 is shown a DECT-system and its connection to the surroundings, at which the fixed part of a DECT-system can be divided into a central unit CCFP, Central Control Fixed part, and one or more RFP, Radio Fixed Part. CCFP is in charge of handover, roaming etc, and RFP acts as "base stations". The fixed part of the system communicates in a wireless way with mobile or fixed terminals. The terminals are here called PP, Portable Part.
The DECT-standard describes in the main the radio interface between RFP and PP. The interface between the surroundings (PSDN, ISDN, GSM etc) and CCFP and the interface between RFP and CCFP is not covered by the standard.
When larger areas shall be equipped with DECT-coverage this implies that the distance between CCFP and RFP becomes comparatively great, which may result in technical problems.

DECT's access method consists of TDMA/TDD with several carrier frequencies. In Figure 2 is shown the division in time and frequency at which channels with traffic, blind channels and channels for new connections are indicated.

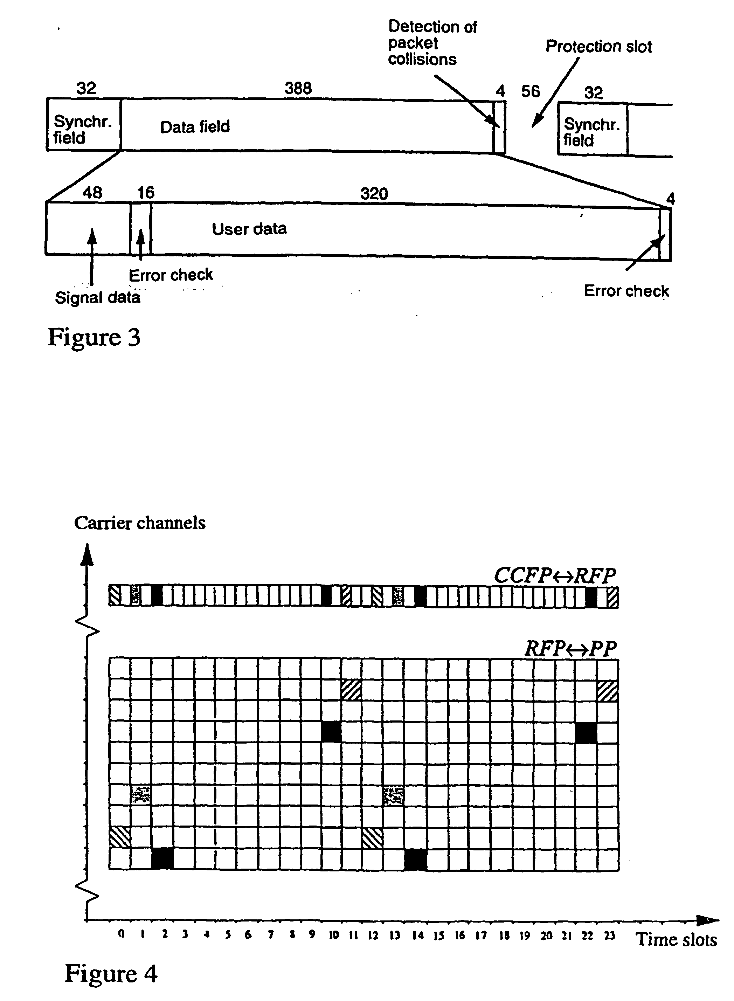

At for instance a telephone call two time slots per time frame, a duplex pair, is allocated. In the figure is shown two examples of this, the time slots two and fourteen, respective five and seventeen.
In DECT all control information is enclosed in the information which is transmitted in the time slots between the fixed part and the portable; accordingly there is no separate signal channel. In Figure 3 is shown how the bits are arranged in the time slot. The figures indicate how many bits every field is using. A frame contains 24 time slots and is 10 ms long. A time slot is accordingly 417 µs long. It has place for 480 bits. The last 556 bit periods are used as protection slot.

To establish and maintain a connection requires that the time slots don't collide with each other. There are several different phenomena which can cause that time slots glide into each other, such as lack of synchronization, time dispersion and time delay. The time dispersion is to its major part depending on the environment, whereas the time delay is depending on the distance of the path.

From what has been described above can be seen that there are several advantages to communicate via radiobetween CCFP and RFP. In the following is described what such a radio interface looks like in one embodiment.

At present a large part of the frequency range with lower frequencies than 20 GHz is used. A radio connection between CCFP and RFP can therefore with advantage be placed on a higher frequency than 20 GHz.

For fixed connections the following frequency ranges are suggested by ERO and CEPT in the interval 21 GHz to 40 GHz:
* 23,0 GHz - 24,5 GHz (2x250 MHz)
* 24,5 GHz - 27,0 GHz (2x1250 MHz)
* 27,0 GHz - 29,5 GHz (2x1250 MHz)
* 37,0 GHz - 39,5 GHz (2x1250 MHz)

The recommendations presume frequency duplex, but since DECT is based on time duplex it is spectrum efficient also to have time duplex in the high frequency radio interface. The radio units will in this way be cheaper.

For utilizing all the time slots at the DECT-system there is required a channel structure which make that the information bits don't collide due to delays in the system. This problem is solved by the time slots between CCFP and RFP being only half as long (double bit rate) as between RFP and PP.

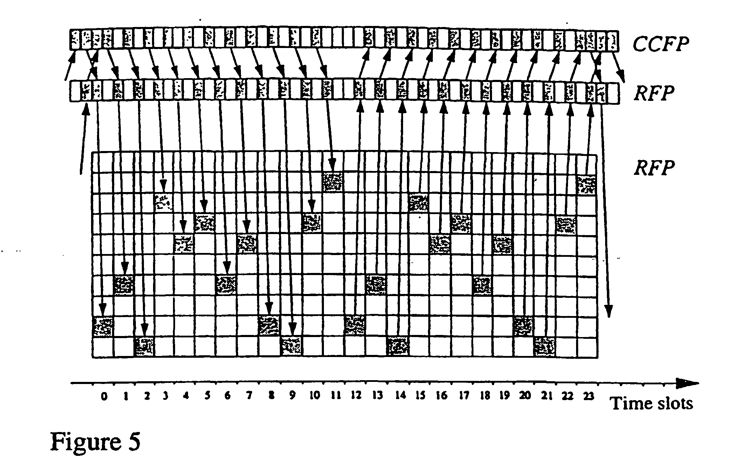

If all the time slots in the DECT-interface shall be possible to use, the transmission of the first time slots from CCFP must be crossed with the last time slots to CCFP. In Figure 5 is shown how the time slots are organized between CCFP and RFP.

The information bits in a time slot are transmitted a half DECT time slot from CCFP before they are to be transmitted between RFP and PP. The delay between a CCFP and its RFP is constantly a half time slot, 208 µs. This delay occurs as a result of the geographical distance, delays in RFP and CCFP and delay element. The bit rate between CCFP and RFP is twice as high as between RFP and PP.

There is a possibility to introduce an adaptive delay element in order to synchronize the transmission and by that increase the maximal distance between CCFP and RFP. The delay between CCFP and RFP is adjusted to 208 µs. A way to create an even better frequency efficiency is that half of the number of RFP are displaced twelve time slots in time, i.e. if transmission in down-link for an RFP corresponds to transmission in up-link for another RFP. The displacement between different RFPs give a more efficient use of CCFP and radio via.

The invention is at first hand intended for DECT-system with separated CCFP and RFP. The most important use is within public systems, such as radio based local network systems, but the invention can also be used in private systems, especially companies.
- CCFP =: Central Control Fixed Part. The central part of the Fixed Part.
- DECT =: Digital European Cordless Telecommunications.
- RFP =: Radio Fixed Part. That part of an FP which contains the radio part.
- PP =: Portable Part. The mobile part of DECT, for instance a wireless telephone. PP can also be fixed mounted units.

The invention is not restricted to the shown examples of embodiment, but can be varied in just any way within the frame of the idea of invention, as it is defined in the following patent claims.

## Claims

1. Telecommunications system for example of type DECT at which wireless communication is performed between a fixed station (CCFP) and a distributed station (RFP) and between a distributed station (RFP) and terminals (PP) by utilization of radio signals with time multiplexing, wherein half as many slots when compared to DECT is used between fixed stations (CCFP) and distributed stations (RFP) and an adaptive delay element is provided for synchronization of transmission between fixed stations and distributed stations, **characterized in that** time slots between different stations are displaced in time, the half of the distributed stations (RFP) being displaced twelve time slots in time and **in that** the first time slot from the fixed station (CCFP) is crossed with the last time slot to fixed station (CCFP) in down and uplink.

2. System according to claim 1, **characterized in that** the length of time slots at transmission between fixed station (CCFP) and distributed station (RFP) is only half as long as between distributed station and terminals (PP).

3. System according to any of the previous claims, **characterized in that** the information bits in a time slot is transmitted a half DECT time slot from a fixed station (CCFP) before they are transmitted between distributed station (RFP) and terminal (PP).

4. System according to any of the previous claims, **characterized in that** the bit rate between fixed station (CCFP) and distributed station (RFP) is twice as high as between distributed station (RFP) and terminal (PP).

## Patentansprüche

1. Fernmeldesystem zum Beispiel des Typs DECT, bei dem drahtlose Kommunikation zwischen einer festen Station (CCFP) und einer verteilten Station (RFP) und zwischen einer verteilten Station (RFP) und Endgeräten (PP) durch Verwendung von Funksignalen mit Zeitmultiplexierung durchgeführt wird, wobei verglichen mit DECT halb so viele Schlitze zwischen festen Stationen (CCFP) und verteilten Stationen (RFP) verwendet werden und ein adaptives Verzögerungselement für Synchronisierung der Übertragung zwischen festen Stationen und verteilten Stationen vorgesehen ist, **dadurch gekennzeichnet, dass** Zeitschlitze zwischen unterschiedlichen Stationen zeitlich verschoben werden, wobei die Hälfte der verteilten Stationen (RFP) zwölf Zeitschlitze zeitlich verschoben ist, und dass der erste Zeitschlitz von der Feststation (CCFP) mit dem letzten Zeitschlitz zur festen Station (CCFP) in Abwärts- und Aufwärtsverbindung gekreuzt ist.

2. System nach Anspruch 1, **dadurch gekennzeichnet, dass** die Länge von Zeitschlitzen bei Übertragung zwischen fester Station (CCFP) und verteilter Station (RFP) nur halb so lang ist wie zwischen verteilter Station und Endgeräten (PP).

3. System nach einem der vorangehenden Ansprüche, **dadurch gekennzeichnet, dass** die Informationsbits in einem Zeitschlitz einen halben DECT-Zeitschlitz von einer festen Station (CCFP) übertragen werden, bevor sie zwischen der verteilten Station (RFP) und dem Endgerät (PP) übertragen werden.

4. System nach einem der vorangehenden Ansprüche, **dadurch gekennzeichnet, dass** die Bitrate zwischen fester Station (CCFP) und verteilter Station (RFP) zweimal so hoch ist wie zwischen verteilter Station (RFP) und Endgerät (PP).

## Revendications

1. Système de télécommunication, par exemple de type DECT, dans lequel une communication sans fil est effectuée entre une station fixe (CCFP) et une station répartie (RFP) et entre une station répartie (RFP) et des terminaux (PP) par utilisation de signaux radio avec multiplexage dans le temps, dans lequel on utilise la moitié du nombre de tranches comparativement à DECT entre stations fixes (CCFP) et stations réparties (RFP), et un élément de retard adaptatif est prévu pour synchronisation de la transmission entre stations fixes et stations réparties, **caractérisé en ce que** les tranches de temps entre différentes stations sont décalées dans le temps, la moitié des stations réparties (RFP) étant décalées de douze tranches de temps dans le temps, et **en ce que** la première tranche de temps à partir de la station fixe (CCFP) est croisée avec la dernière tranche de temps vers la station fixe (CCFP) dans des liaisons descendante et montante.

2. Système selon la revendication 1, **caractérisé en ce que** la longueur des tranches de temps lors de la transmission entre station fixe (CCFP) et station répartie (RFP) est seulement la moitié de la longueur utilisée entre station répartie et terminaux (PP).

3. Système selon l'une quelconque des revendications précédentes, **caractérisé en ce que** les bits d'information dans une tranche de temps sont transmis une demi-tranche de temps DECT, à partir d'une station fixe (CCFP), avant qu'ils soient transmis entre une station répartie (RFP) et un terminal (PP).

4. Système selon une quelconque des revendications précédentes, **caractérisé en ce que** le débit binaire entre station fixe (CCFP) et station répartie (RFP) est deux fois plus grand qu'entre station répartie (RFP) et terminal (PP).
